(19) Europäisches Patentamt

European Patent Office

Office européen des brevets

(11) **EP 0 907 074 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(51) Int Cl.:
***G01N 21/64*** *(2006.01)*

(21) Anmeldenummer: **98890284.7**

(22) Anmeldetag: **02.10.1998**

(54) **Optisch-chemischer Sensor**

Optical chemical sensor

Capteur optique pour la détection d'espèces chimiques

(84) Benannte Vertragsstaaten:
**DE FR GB**

(30) Priorität: **03.10.1997 AT 167897**

(43) Veröffentlichungstag der Anmeldung:
**07.04.1999 Patentblatt 1999/14**

(60) Teilanmeldung:
**06022007.6**

(73) Patentinhaber: **F. HOFFMANN-LA ROCHE AG
4070 Basel (CH)**

(72) Erfinder:
• **Hartmann, Paul
8160 Weiz (AT)**
• **Leiner, Marco Jean Pierre
8045 Graz (AT)**

(74) Vertreter: **Schwarz, Albin et al
Kopecky & Schwarz
Patentanwälte
Wipplingerstrasse 32/22
1010 Wien (AT)**

(56) Entgegenhaltungen:
**WO-A-95/08107                WO-A-96/17012
WO-A-97/12227**

• **HARTMANN P ET AL: "Photobleaching of a ruthenium complex in polymers used for oxygen optodes and its inhibition by singlet oxygen quenchers" SENSORS AND ACTUATORS B, Bd. 51, Nr. 1-3, 31. August 1998 (1998-08-31), Seite 196-202 XP004154009 ISSN: 0925-4005**

**Beschreibung**

Die Erfindung betrifft einen optisch chemischen Sensor mit einer Matrix, die einen Lumineszenzindikator aufweist, dessen Lumineszenz mit Sauerstoff gelöscht bzw. gequencht werden kann.

Optisch chemische Sensoren (Optoden), im folgenden der Einfachheit halber als ,optische Sensoren" oder "Sensoren" bezeichnet, werden heutzutage verbreitet, vorzugsweise in Form von Membranen, in Sensorkonfigurationen eingesetzt, um bestimmte Substanzen, wie z.B. Sauerstoff oder Glucose, in einer Probe quantitativ zu bestimmen. Optische Sensoren werden beispielsweise in der Umweltmeßtechnik und in der Notfallmedizin (Blutgasanalyse) verwendet. Die Funktionsweise von optischen Sensoren und der prinzipielle Aufbau einer Sensorkonfiguration, die im allgemeinen einen aus mehreren Schichten bestehenden optischen Sensor, eine Anregungslichtquelle und ein optoelektronisches Detektionssystem umfaßt, ist in der Literatur beschrieben (z.B. Sensors and Actuators B 11 (1993), S. 281-289; Sensors and Actuators B 29 (1995), S. 169-173).

Es ist bereits eine Vielzahl an Indikatorsubstanzen und Sensoren bekannt, welche auf die erwähnten chemischen Substanzen, insbesondere Sauerstoff, mit einer Änderung einer optischen Eigenschaft des Indikators reagieren. Beispielsweise beschreibt Stevens in der US-A- 3,612,866 einen kalibrierbaren sauerstoffempfindlichen optischen Sensor, der den Farbstoff Pyren enthält, dessen Lumineszenz von eindiffundierendem Sauerstoff konzentrationsabhängig gelöscht wird. Gleichzeitig enthält der Sensor an einer benachbarten Stelle einen Referenzsensor, der durch eine zusätzliche sauerstoffimpermeable Membran abgedeckt wird. Die Sauerstoffkonzentration wird durch das Verhältnis der Signale beider Bereiche ermittelt.

Weiters beschreibt Lübbers in der US-Patentneuauflage RE 31,879 einen lumineszenzoptischen Sauerstoffsensor mit dem Indikator Pyrenbuttersäure, optional in eine Silikonmatrix mit hoher Permeabilität für Sauerstoff eingerührt, dessen sensitive Schicht zwischen einer lichtdurchlässigen Deckschicht und einer sauerstoffdurchlässigen Grundschicht, die in Kontakt mit der untersuchten Flüssigkeit steht, eingebaut ist.

In einer weiteren US-A- 4,657,736 beschreibt Marsoner einen Sauerstoffsensor mit modifizierten Farbstoffen, die in Silikon gut löslich sind und damit eine erhöhte Stabilität des Sensors gegenüber Aggregation der Farbstoffmoleküle bieten. Der Sensor wird dabei durch Einrühren des Farbstoffes in ein Prepolymer und anschließende Polymerisation zu Silikon hergestellt.

In der US-A- 4,752,115 beschreibt Murray eine sauerstoffsensitive Schicht aus einem Übergangsmetallkomplex in einer weichgemachten organischen Polymermatrix (z.B. PVC), die als Schicht auf ein Lichtwellenleiterelement aufgebracht wird, über das das Anregungslicht eingekoppelt wird. Diese Komplexe sind im allgemeinen photostabiler als organische Farbstoffe. Gemessen wird wiederum die Lumineszenzintensität in Abhängigkeit von der Sauerstoffkonzentration in der Schicht.

In der US-A- 4,775,514 beschreibt Barnikol eine lumineszierende Oberfläche zur Sauerstoffbestimmung in Gasen, Flüssigkeiten und Geweben. Die sensitive Schicht an der Oberfläche besteht aus einer homogenen Mischung eines organischen Farbstoffes (Pyren, Koronen, u.a.) mit Silikon.

Khalil beschreibt in der US-A- 4,810,655 und der US-A- 5,043,286 die Messungen der Abklingzeiten phosphoreszierender Farbstoffe, die eine lange, meßtechnisch gut zugängliche Abklingzeit aufweisen, anstelle der Messung der Lumineszenzintensität. Die eingesetzten fluorierten Porphyrine zeigen eine relativ hohe Photostabilität. Weiters ist der Parameter Abklingzeit gegenüber Lumineszenzintensität weniger stark von Photozersetzungseffekten betroffen.

Dieselbe Technik nützt Bacon in der US-A- 5,030,420, in der ein Sauerstoffsensor, bestehend aus einem Ruthenium(II)-Komplex, immobilisiert in einem Silikon, beschrieben wird, welches impermeabel gegenüber vielen Flüssigkeiten, z.B. Säuren und Basen, Komplexbildnern, oxidierenden und reduzierenden Flüssigkeiten ist, wohl aber sehr permeabel für Sauerstoff und andere Gase ist. Dieser Sensor enthält den Indikator jedoch elektrostatisch gebunden an Füllstoffpartikeln (Kieselgel) im Silikon, ein Umstand, auf den der Autor erst zu einem späteren Zeitpunkt hingewiesen worden ist (z.B. Sacksteder et al, Anal. Chem. 65, p. 3480). Dadurch ist vor allem eine gute Stabilität gegenüber Auswaschen des Farbstoffes gegeben.

Die Stabilität des Sensors gegen Auswaschen des Indikators ist auch Inhalt von Vorschlägen in der US-A- 5,070,158 von Holloway und der US-A- 5,128,102 von Kaneko, die die Möglichkeit der chemischen Bindung von Indikatormolekülen an die Polymermatrix offenlegen.

Eine andere Möglichkeit, die Stabilität des Sensors gegen Verlust des Indikators und damit gegen eine Verschlechterung der photophysikalischen Eigenschaften der Membran zu verbessern, wird in der US-A- 5,511,547 von Markle dargelegt. Eine spezielle Silikonmatrix mit polaren Carbinol-Gruppen dient dazu, die Wechselwirkung zwischen Indikator (z.B. Tris (4,7-diphenyl-1,10-phenanthrolin)-ruthenium(II)-chlorid) und Matrix zu erhöhen, um das Auswaschen und auch das Aggregieren der Indikatormoleküle zu reduzieren. Diese Maßnahmen sind jedoch nicht dazu geeignet, die Photostabilität der Membran an sich wesentlich zu verbessern.

Schließlich wird in der US-A- 5,242,835 von Jensen eine Methode beschrieben, die Konzentration von Sauerstoff in einer Probe durch Detektion der Emission des durch Energieübertragung beim Löschen der Lumineszenz angeregten Singulett-Sauerstoffs selbst, die etwa bei einer Wellenlänge von 1270 nm auftritt, zu bestimmen. Auch diese Methode ist anfällig für Photozersetzung von Indikator oder Matrix durch eben diesen reaktiven Singulett-Sauerstoff, da letzterer bei einer photochemischen Reaktion strahlungslos in den Grundzustand zurückfällt und auch die Sensitizer-Moleküle (Indikatoren), die zur Produktion des Singulett-Sauerstoff dienen, angegriffen werden.

Wie bereits erwähnt, enthalten optisch chemische Sensoren im allgemeinen Farbstoffe, die auf eine Konzentrationsänderung der zu analysierenden Substanz innerhalb der sensitiven Schicht mit einer Änderung ihrer photophysikalischen Eigenschaften reagieren. Beispielsweise nehmen Lumineszenzintensität und -abklingzeit von Sauerstoffsensoren mit zunehmender Sauerstoffkonzentration in der sensitiven Schicht ab.

Ein Problem bei vielen Sensoren, insbesondere Sauerstoffsensoren, ist ihre Anfälligkeit auf Zersetzung, die durch das eingestrahlte Anregungslicht ausgelöst wird (Anal. Chem. 1991, 63, S. 337-342). Auf Zersetzung anfällig sind dabei der Lumineszenzindikator selbst und auch die Matrix. Dieses Problem der photoinduzierten Zersetzung tritt insbesondere dann auf, wenn die Bestrahlung mit hoher Intensität erfolgt, um die Signalqualität zu verbessern und den Meßfehler zu reduzieren, oder wenn mit einem einzigen Sensor über einen sehr langen Zeitraum gearbeitet wird, wie dies beim Monitoring von chemischen Substanzen der Fall ist. Da die Lumineszenzintensität direkt von der Farbstoffkonzentration abhängt, ist die Photozersetzung dieser Farbstoffe in derartigen Sensoren unerwünscht.

Die Abklingzeit der Lumineszenz eines Sensors mit darin immobilisierten Farbstoffen ist insbesondere dann abhängig von der Konzentration der Luminophore, wenn

- erstens eine überlagerte Hintergrundlumineszenz (von anderen Quellen als dem Farbstoff) auftritt,
- zweitens durch Photozersetzung der Farbstoffe wiederum lumineszierende Abbauprodukte entstehen, deren Abklingzeit von der Abklingzeit der Lumineszenz der Ausgangsfarbstoffe verschieden ist, und
- drittens eine Zersetzung der Matrix (Umgebung) des Farbstoffes dessen photophysikalische Eigenschaften ändert.

Die Zersetzung des Luminophors oder der Matrix (beispielsweise durch Wirkung von Singulett-Sauerstoff) typischer Sensorsysteme ist also aus folgenden Gründen nicht wünschenswert:

Einerseits führt eine reine Abnahme der Lumineszenzintensität (bei gleichbleibender Abklingzeit) zu einer relativen Erhöhung der Hintergrundfluoreszenz und damit zu einer Veränderung der Kalibrierkurven. Eine Abnahme der Lumineszenzintensität ist ein Problem für alle Sensorsysteme, wenn dadurch die zu messende Strahlungsmenge soweit sinkt, daß der dynamische Bereich der Empfängerelektronik verlassen wird. Im speziellen problematisch ist die Abnahme der Lumineszenzintensität für Sensorsysteme, die auf Intensitätsmessung der Lumineszenz beruhen, aber auch für Meßsysteme, die eine Phasenverschiebung der Lumineszenz, bedingt durch die endliche Lebensdauer der angeregten Zustände der Farbstoffmoleküle, auswerten.

Andererseits führt eine Änderung der Lumineszenzabklingzeit durch Photozersetzung in direkter Weise zu einer Veränderung der photophysikalischen Eigenschaften des Sensorsystems, was sich sowohl auf Intensitäts- als auch auf Abklingzeitmeßsysteme negativ auswirkt.

Wie bereits oben beschrieben, ändern optisch chemische Sensoren ihre photophysikalischen Eigenschaften (Lumineszenzintensität, Quantenausbeute, Abklingzeit ...) in Anwesenheit zu analysierender Substanzen ("Quencher"). Die Funktion zwischen der Konzentration der Substanz und dem photophysikalischen Parameter, die Kalibrierfunktion, hat beispielsweise die Form einer Stern-Volmer Gleichung (1), (3):

$$I_0/I = 1 + K_{SV}[Q] \qquad\qquad (1a)$$

$$\tau_0/\tau = 1 + K_{SV}[Q] \qquad\qquad (1b)$$

$$K_{SV} = k_q \tau_0 \qquad\qquad (1c)$$

$K_{SV}$ ist die Stern-Volmer Konstante, $k_q$ ist die bimolekulare Deaktivierungsrate und $[Q]$ die Konzentration des Quenchers. $I$ ist die Lumineszenzintensität und $\tau$ deren Abklingzeit. Der Index 0 bezeichnet das Fehlen des Quenchers.

In vielen Fällen ist die Abklingfunktion der Lumineszenz durch ein multiexponentielles Modell beschreibbar (Glg. 2).

$$i(t) = \sum_{i=l}^{m} B_i e^{-t/\tau_i} \qquad (2)$$

i(t) ist dabei der zeitliche Verlauf der Emission nach einem vergleichsweise kurzen Anregungspuls. $B_i$ sind die Amplituden. $\tau_i$ sind die Zeitkonstanten, und m ist die Anzahl von einfach exponentiellen Modellfunktionen (Index i), als deren Summe die Abklingfunktion beschrieben werden kann.

Hier kommt dann auch eine komplexere Form der Stern-Volmer Gleichung zur Anwendung:

$$\frac{I_0}{I} = \frac{\tau_{0av}}{\tau_{av}} = \left[ \sum_{i=l}^{m} \frac{f_{0i}}{l + K_{svi}[Q]} \right]^{-1} \qquad (3)$$

$f_{0i}$ ist der relative Anteil der i-ten Abklingzeit-Komponente. $\tau_{av}$ ist eine mittlere Abklingzeit, gewichtet nach den Amplituden $B_i$. Der Sonderfall m=2 und $K_{SV2}$=0 wird als Falschlichtmodell bezeichnet, wobei Falschlicht z.B. eine Hintergrundfluoreszenz sein kann. Daraus sieht man, daß Lumineszenzintensität und -abklingzeit durch andere Einflüsse als durch den vorliegenden Quencher, sowie durch Änderung des Falschlichtanteils (Hintergrundfluoreszenz) zu einer Änderung der Parameterwerte der Kalibrierfunktion fuhren müssen.

Die Intensität I der Lumineszenz ist direkt proportional zu deren Quantenausbeute $\Phi_L$:

$$I = k \cdot \Phi_L \qquad (4),$$

k ist eine Proportionalitätskonstante.

Die Quantenausbeute wiederum hängt mit der Abklingzeit über die strahlende Deaktivierungsrate $k_r$ des angeregten Zustandes zusammen:

$$\Phi_L = k_r \tau_0 \qquad (5)$$

Aus diesen Funktionen ist ersichtlich, daß eine Änderung der Abklingzeit direkt in eine Änderung der Lumineszenzintensität (Glg. 4 und 5) und der Stern-Volmer Konstanten mündet (Glg. 1c). Damit werden die Kennparameter, die beispielsweise anhand der Kalibrierung eines Sensors mit Prüfsubstanzen bekannter Zusammensetzung erhoben werden, verändert, was eine Rekalibrierung des Sensors notwendig macht. Häufige Rekalibrierung ist jedoch ein immenser Nachteil, wenn über längere Zeit gemessen werden soll (Monitoring). Zudem können die photophysikalischen Eigenschaften eines solchen Sensors derart verändert werden, daß die Empfindlichkeit selbst gar nicht mehr gegeben ist, um Messungen durchzuführen.

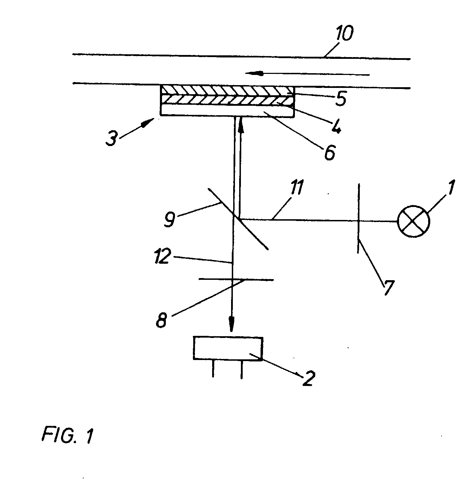

Ein derartiges Sensorsystem weist im allgemeinen die weithin bekannte optische Anordnung auf, wie sie in der Figur 1 schematisch dargestellt ist. Dieses Sensorsystem umfaßt: eine Lichtquelle 1 für Anregungslicht geeigneter Wellenlänge (passend zum Absorptionsspektrum des Lumineszenzfarbstoffes), einen Detektor 2 zur Erfassung der Lumineszenz des Sensors 3, der aus einer sensitiven Schicht 4, die den Lumineszenzindikator enthält, einer optischen Isolierschicht 5 und einem transparenten Träger 6 besteht, Filter 7, 8 für das Anregungslicht bzw. das emittierte Licht, einen Strahlenteiler 9 und einer Meßzelle 10, die beispielsweise ein Durchflußrohr sein kann, durch welches die zu untersuchende Probe transportiert wird. Die Transportrichtung der Probe ist in der Figur 1 mit einem Pfeil symbolisiert.

Die Messung wird wie folgt vorgenommen:

Die zu analysierende Probe, z.B. Blut, in welchem die Sauerstoffkonzentration bestimmt werden soll, wird durch das Durchflußrohr 10 transportiert und kommt dabei in Kontakt mit der optischen Isolierschicht 5, die für Sauerstoff durchlässig ist. Der Sauerstoff gelangt durch die optische Isolierschicht 5 in die sensitive Schicht 4, welche eine Matrix aus z.B. einem Polymer darstellt, in welchem sich der Lumineszenzindikator für Sauerstoff befindet. Der Lumineszenzindikator wird durch Anregungslicht 11, welches von der Lichtquelle 1 kommt, zur Lumineszenz angeregt, welche von Sauerstoff konzentrationsabhängig gequencht wird. Die Emission 12 wird im Detektor 2 elektronisch erfaßt, und mit diesem Wert wird auf die Sauerstoffkonzentration in der Probe rückgerechnet.

Für Abklingzeit- oder Phasenverschiebungsmessungen kann eine Lichtquelle mit zeitlicher Modulation der Intensität (Pulsbetrieb, Sinus- oder Rechteckmodulation) und ein zeitlich auflösender oder empfindlichkeitsmodulierter Detektor verwendet werden. Im einfachsten Fall hängt die Phasenverschiebung ΔΦ gegenüber der sinusförmig modulierten Lichtquelle über die Kreisfrequenz ω der Sinusmodulation mit der Abklingzeit τ zusammen:

$$tg(\Delta\Phi)=\omega\tau \qquad\qquad\qquad (6)$$

Damit ändert sich auch die Phasenverschiebung des Sensors, wenn die Photozersetzungsprodukte eine andere Abklingzeit als der Ausgangsfarbstoff haben oder die Umgebung (Matrix) des Farbstoffes derart beeinflußt wird, daß sich die Abklingzeit verändert.

Sämtliche bisher in der wissenschaftlichen Literatur und in der Patentliteratur beschriebenen Sensoren sind nicht geeignet, diese oben genannten Photozersetzungseffekte wesentlich zu reduzieren. Zwar sind einige der oben genannten Systeme explizit als Systeme mit verbesserter Stabilität beschrieben, dies ist jedoch mittels traditioneller Maßnahmen, wie Auswahl einer bestimmten Polymermatrix oder Immobilisierungsmethode, nur sehr begrenzt realisierbar.

Carraway et al. beschreiben (Anal. Chem., 1991, 63, S. 337-342), daß bei Sauerstoffsensoren die photochemische Zersetzung des Sensors von Sauerstoff gefördert wird, daß aber Singulett-Sauerstoff, der durch Quenchen des angeregten Lumineszenzindikators entsteht, an der Sensorzersetzung nicht direkt beteiligt sein soll und nicht die Hauptursache für die Sensorzersetzung sein soll. Zur Stabilisierung der Sauerstoffsensoren wird von diesen Autoren vorgeschlagen, den Sensor vor Gebrauch zu photolysieren, um reaktive Komponenten, die für die Zersetzung verantwortlich sein sollen, zu zerstören. Aber auch diese Maßnahme ist nicht geeignet, die photoinduzierte Zersetzung zu unterbinden.

Aufgabe der Erfindung ist es, einen optischen Sensor vorzuschlagen, welche den oben genannten Nachteil nicht aufweist und eine erhöhte Stabilität gegenüber photoinduzierter Zersetzung aufweist.

Der erfindungsgemäße optische Sensor mit einer Matrix, die einen Lumineszenzindikator aufweist, dessen Lumineszenz mit Sauerstoff gequencht werden kann, ist dadurch gekennzeichnet, daß der Sensor zur Stabilisierung des Lumineszenzindikators und der Matrix mindestens ein Mittel aufweist, welches Singulett-Sauerstoff deaktivieren kann.

Die Erfindung beruht auf der Erkenntnis, daß bei Sensoren, welche beim Betrieb molekularen Sauerstoff in der Matrix enthalten, sei es, weil Sauerstoff der Analyt ist oder - im Falle eines anderen Analyten - weil molekularer Sauerstoff zusammen mit dem Analyten als Begleitstoff aus der zu analysierenden Probe in den Sensor eindiffundiert ist, die photoinduzierte Zersetzung in erster Linie durch Singulett-Sauerstoff ausgelöst wird, und daß es möglich ist, den Singulett-Sauerstoff, der im Sensor gebildet wird, so wirksam zu deaktivieren, daß die photoinduzierte Zersetzung des Lumineszenzindikators zurückgedrängt wird.

Die Möglichkeit, bestimmte Eigenschaften, insbesondere Stabilität oder Effizienz, von organischen Systemen in Verbindung mit Farbstoffen, die von Singulett-Sauerstoff angegriffen werden können, zu verbessern, ist in den Gebieten der Fotografie (photochromatische Substanzen), der Laserfarbstoffe, der Chemilumineszenz und der Singulett-Sauerstoffproduktion bereits bekannt und genutzt worden. Als Beispiel dafür dienen die im folgenden angeführten Publikationen:

Beispielsweise beschreibt Atkinson in "Use of tertiary amino-groups as substituents to stabilise compounds towards attack by singlet oxygen" (Journal of the Chemical Society, Perkin Transactions 1, 1973, p. 960-964) die Möglichkeit, durch chemische Bindung einer tertiären Amino-Gruppe über eine Alkylgruppe an Anthracen diesen Farbstoff effektiv gegen Zersetzung durch Singulett-Sauerstoff, der über Methylenblau in den angeregten Zustand gekommen ist, zu schützen.

Des weiteren beschreibt Koch in der US-A 4,428,859 die Möglichkeit, die Stabilität von Laserfarbstoffen (Coumarine, Xanthene, Quaterphenyle, Stilbene) in stickstoffgepumpten Farbstofflasern durch Zugabe von 0.01M 1,4-Diazabizyklo[2,2,2]oktan (DABCO) zu verbessern.

In der US-A- 5,087,388 beschreibt Mahoney die Stabilisierung von Laserfarbstoffen durch kontrollierte Zugabe von Trialkylaminen, die Carbonyl-Gruppen des Laserfarbstoffes zu weniger photoempfindlichen Alkoholgruppen umwandeln und als Radikalfänger dienen.

Weiters ist auch dem Gebiet der Fotografie bekannt geworden, photochromatische Substanzen, das sind Farbstoffe, die sich unter Einstrahlung von Licht umwandeln und dabei ihre Farbe ändern, gegen Photooxidation durch Singulett-Sauerstoff zu stabilisieren. Beispiele dazu wurden in der US-A- 4,720,356 von Chu dargelegt, wobei zu Spirooxazin-Farbstoffen gewisse UV-Stabilisatoren aus der Klasse der "hindered amine light stabilizer" (HALS = ein sterisch gehindertes Amin, verwendet als Stabilisator gegen Zersetzung durch Licht) sowie physikalische Quencher von Singulett-Sauerstoff zugesetzt werden.

In der US-A- 5,242,624 beschreibt Malatesta die additive Wirkung von zwei verschiedenen lichtstabilisierenden Substanzen - DABCO und ein HALS - in einer photochromatischen Mixtur.

In der US-A- 5,225,113 zeigt Busetto, daß die Lichtstabilisierung photochromatischer Farbstoffe auch in thermoplastischen Matrizen funktioniert.

Schließlich wird in der US-A- 4,855,211 von Janssens dargelegt, daß chemische Gruppen, die Singulett-Sauerstoff deaktivieren können, auch polymer gebunden bzw. in Copolymere eingebaut werden können, die für Anwendungen in der Fotografie geeignet sind.

Weiters ist auf dem Gebiet der Chemilumineszenz bekannt, beispielsweise aus der US-A-5,380,650 von Barnard, daß durch Zugabe eines HALS oder DABCO die Lichtausbeute einer bestimmten Chemilumineszenz-Reaktion erhöht werden kann.

Des weiteren beschreibt Ogilby in dem Artikel "Formation and removal of singlet oxygen in bulk polymers: events that may influence photodegradation" aus dem Buch "Polymer Durability: Degradation, Stabilization and Lifetime Prediction" (ACS Advances in chemistry series 249, 1995, S. 113-126) die Möglichkeit der Zersetzung von Rubren in einer Polymermatrix als Folge der Wirkung von Sauerstoff, der durch Energieübertragung von Rubren selbst in den Singulett-Zustand gebracht worden ist, sowie die Möglichkeit, diese Zersetzung durch Zugabe von DABCO drastisch zu reduzieren.

Die Anwendung von Mitteln zur Deaktivierung von Singulett-Sauerstoff in optischen Sensoren ist nach Wissen der Anmelderin bis heute nicht beschrieben worden.

Als besonders wirksame Mittel zum Deaktivieren von Singulett-Sauerstoff haben sich in der vorliegenden Erfindung solche erwiesen, die mindestens eine Aminogruppe, vorzugsweise eine tertiäre Aminogruppe, aufweisen.

Ferner haben sich zum Deaktivieren von Singulett-Sauerstoff insbesondere als wirksam erwiesen: ein „hindered amine light stabilizer" (HALS), ein Übergangsmetallkomplex, vorzugsweise ein Komplex aus einem Dialkyldithiocarbamat, Dialkyldithiophosphat oder einer Schiff' schen Base und einem Übergangsmetallion, wobei das Übergangsmetallion am besten Ni(II), Co(II), Zn(II) oder Fe(III) ist, ein Salz mit den Anionen Cl⁻, Br⁻, J⁻ oder $NO_3^-$, oder ein Karotenoid.

Das Mittel zum Deaktivieren von Singulett-Sauerstoff kann in der Matrix enthalten sein, d.h. in Form einer Mischung mit der Matrix vorliegen. Es kann aber auch an die Matrix gebunden sein, wodurch ein Diffundieren aus der Matrix hinaus wirksam verhindert wird.

Das Mittel kann aber auch an den Lumineszenzindikator, gegebenenfalls über eine Gruppe $-(CH_2)_n-$, worin n eine ganze Zahl von 3 bis 20 ist, gebunden sein. Dies hat den Vorteil, daß ein besonders effektiver Schutz gegen Photozersetzung gegeben ist, da sich das Mittel in unmittelbarer Nähe des Indikators befindet.

Die Matrix ist vorzugsweise ein Polymer, und zwar insbesondere Polystyrol, Polyvinylchlorid, weichgemachtes Polyvinylchlorid, Polymethylmethacrylat, weichgemachtes Polymethylmethacrylat, ein Polymethylmethacrylat/Cellulose-acetyl-butyral-Gemisch, ein Kieselgel, ein Sol-Gel, ein Hydrogel, ein Silikon, Poly-α-methylstyrol, ein Polysulfon, Ethylcellulose, Cellulosetriacetat, Polytetrafluorethylen, ein Polyester, Polybutadien, Polystyrol-co-butadien, Polyurethan, Polyvinylbutyral, Polyethylacrylat oder Poly-2-hydroxyethylmethacrylat.

Bevorzugt sind auch Polymere, die aus Monomeren hergestellt sind, die zumindest teilweise eine Aminogruppe, vorzugsweise eine tertiäre Aminogruppe, tragen.

Als Lumineszenzindikator eignen sich insbesondere: ein Tris-Chelat-Komplex von Ruthenium(II), Osmium(II), Rhodium(III) oder Iridium(III), ein Metallporphyrin oder ein Metall-porphyrin-keton von Platin oder Palladium, ein Lanthanid-Komplex von Terbium, oder ein polycyclischer aromatischer Kohlenwasserstoff, wie z.B. Pyren, Pyrenbuttersäure und Decacyclen.

Die Erfindung betrifft auch eine optische Sensorkonfiguration mit einem optischen Sensor, einer Lichtquelle zur Erzeugung von Licht zur Anregung des Lumineszenzindikators und einer Meßeinrichtung zur Messung mindestens einer optischen Eigenschaft des Lumineszenzindikators, die dadurch gekennzeichnet ist, daß ein erfindungsgemäßer optischer Sensor vorgesehen ist.

Die Erfindung betrifft ferner eine Methode zur Bestimmung eines Analyten in einer gasförmigen oder flüssigen Probe mittels eines optischen Sensors, der mit der Probe direkt oder indirekt in Kontakt gebracht wird, die dadurch gekennzeichnet ist, daß eine erfindungsgemäße Sensorkonfiguration eingesetzt wird.

Wie oben erwähnt, ist das Prinzip der Erfindung auch auf andere optisch chemische Sensoren, etwa pH-Sensoren oder $pCO_2$-Sensoren anwendbar, sofern auch in diesen Sensoren reaktiver Sauerstoff entstehen kann. Beispielsweise verfügt der weithin bekannte pH-sensitive Indikator 1-Hydroxy-pyren-3,6,8-trisulfonat (HPTS) über eine signifikante Querempfindlichkeit gegenüber Sauerstoff(siehe Leiner, Sensors and Actuators B 11, 281-289, 1993), die sich auch auf die Photostabilität des Indikators negativ auswirkt.

Im Sensor kann aus einem im angeregten Zustand befindlichen Kollisionskomplex zwischen einem Indikatormolekül und molekularem Sauerstoff durch Energieübertragung vom Indikatormolekül ein Singulett-Zustand des molekularen Sauerstoffs "Singulett-Sauerstoff" entstehen, der nach diffusiver Trennung des Kollisionskomplexes entweder strahlungslos oder unter Aussendung von Strahlung bei einer Wellenlänge von 1270 nm in den Grundzustand zurückfällt, oder von der Polymermatrix strahlungslos deaktiviert wird, oder aber eine chemische Reaktion und damit Umwandlung des Indikators verursacht, oder eine chemische Reaktion mit der Matrix verursacht, was die molekulare Umgebung des Farbstoffes verändert. Dieser äußerst reaktive Singulett-Sauerstoff kann jedoch im Sinne der Erfindung auch von den beigemengten stabilisierenden Additiven deaktiviert werden, entweder durch Energietransfer, Ladungstransfer oder eine chemische Reaktion (oder durch Kombinationen dieser Mechanismen), und ist damit für den Sensor nicht mehr gefährlich.

Bei der Auswahl der Mittel bzw. Additive ist in allen Ausführungsformen darauf zu achten, daß es nicht zu einer starken Hintergrundlumineszenz durch die zugesetzten Substanzen kommt, bzw. daß sie nicht die photophysikalischen Eigenschaften oder sogar die chemische Konsistenz des Indikators wesentlich verändern, so daß die Funktion des Sensors nicht mehr gewährleistet ist. Weiters würde eine starke Flüchtigkeit der zugesetzten Substanzen die Vorteile der Stabilisierung wieder zunichte machen, vor allem dann, wenn durch die zugesetzte Substanz eine Beeinflussung der photophysikalischen Eigenschaften des Indikators gegeben ist, die sich dann ebenfalls ändern, wenn sich die Konzentration der zugesetzten Substanz ändert.

Folgende Beispiele negativer Einflüsse von Additiven auf die photophysikalischen Eigenschaften gewisser Sensortypen können angegeben werden:

1. Sauerstoffsensoren, bestehend aus dem Indikator Tris(4,7-diphenyl-1,10-phenanthrolin)-ruthenium(II)-perchlorat, der homogen in einer Konzentration von 5mM in einer Polystyrol-Matrix gelöst vorliegt, werden durch Zugabe von 1 Gew.-% von Bis-(tetraethylammonium)-bis-(dimercaptomaleonitrilato)-nickelat(II), einem Singulett-Sauerstoff-Quencher, praktisch unbrauchbar gemacht, da das Additiv auch die Lumineszenz des Ruthenium-Komplexes zum größten Teil löscht.

2. Die Photostabilität von Sauerstoffsensoren, bestehend aus dem Indikator Tris(4,7-diphenyl-1,10-phenanthrolin)-ruthenium(II)-perchlorat, der homogen in einer Konzentration von 5mM in einer Polystyrol-Matrix gelöst vorliegt, wird durch Zugabe von 1 Gew.-% 3,5,N,N-Tetramethyl-anilin wesentlich verschlechtert, weil dieses Additiv sehr effektiv Ruthenium-Komplexe reduziert.

3. Die Photostabilität von Sauerstoffsensoren, bestehend aus dem Indikator Tris(4,7-diphenyl-1,10-phenanthrolin)-ruthenium(II)-perchlorat, der homogen in einer Konzentration von 5mM in einer Polystyrol-Matrix gelöst vorliegt, wird durch Zugabe von 1 Gew.-% diverser Phenole (Irganox 245, Irganox 1076, BHT usw.) wesentlich verschlechtert. Phenolische Antioxidantien dienen vorwiegend dem Schutz von Polymeren gegen Photooxidation, es treten aber in der dabei wirksam werdenden chemischen Reaktionskette Radikale der Antioxidantien auf, die ihrerseits die Ruthenium-Komplexe angreifen können.

Anhand des folgenden Beispiels soll die günstige Wirkungsweise der vorliegenden Erfindung demonstriert werden.

Beispiel

In einen Sauerstoffsensor mit dem Lumineszenzindikator Tris(4,7-diphenyl-1,10-phenanthrolin)-ruthenium (II)-perchlorat, der homogen in einer Konzentration von 5mM in einer Polystyrol-Matrix gelöst vorliegt, wird das zyklische Amin 1,4-Diazabizyklo[2,2,2]oktan (DABCO) in einer Konzentration von beispielsweise 90mM eingebaut: Man löst 2g Polystyrol in 15 ml Methyl-Ethyl-keton, wiegt 13.5mg des Ruthenium-Indikators und 20mg DABCO ein und löst diese durch Rühren auf. Die Lösung wird durch bekannte Methoden, beispielsweise durch Rakeln oder Spin-coating, als dünne Schicht auf einen Träger (Mylar, Glas etc.) aufgebracht. Das Lösungsmittel wird abgedampft.

Der Träger dient gleichzeitig dazu, die sensitive Schicht der Sensormembran gegen unerwünschte Beeinflussung von Sauerstoff aus der Umgebung der Membran zu schützen. Optional kann auch noch eine optische Isolierschicht aus einem sauerstoffdurchlässigen Material aufgezogen werden, um die Probe vom Sensor optisch zu entkoppeln.

Zum Vergleich wird eine gleichartige Schicht unter Weglassen von DABCO präpariert.

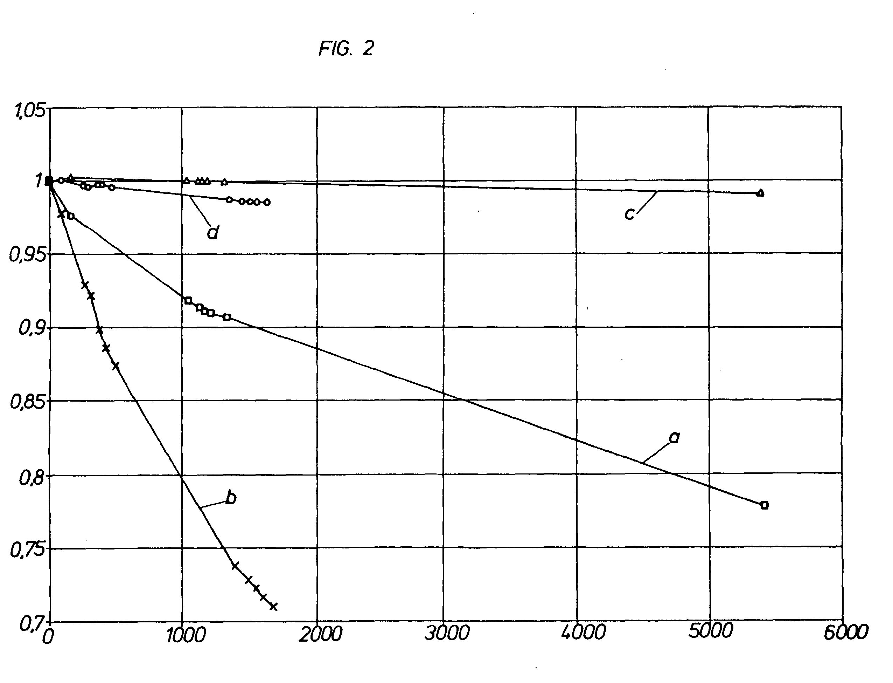

Figur 2 zeigt ein Diagramm, in welchem als Ordinate die relative Abnahme der Lumineszenzintensität und der Phasenverschiebung $\Delta\Phi$ (Glg. 6) während der Beleuchtung des Sensors mit blauem Licht (Zentralwellenlänge 470nm einer Nichia NSPB500 LED) der Stärke $E_e$=20mW/cm$^2$ bei T=37°C unter Umgebungsluft aufgetragen ist. Als Abszisse ist die Beleuchtungszeit in Minuten angegeben.

Zum Vergleich sind im Diagramm und in der Tabelle Meßdaten sowohl des DABCO enthaltenden Sensors (relative Intensität: Kurve a; relative Phasenverschiebung: Kurve c), als auch des DABCO-freien Sensors (relative Intensität: Kurve b; relative Phasenverscheibung: Kurve d) dargestellt. Wie aus dem Diagramm ersichtlich, ist sowohl die relative Phasenverschiebung (Abklingzeit), als auch - in stärkerem Maße - die relative Lumineszenzintensität vom Effekt des Photobleichens betroffen.

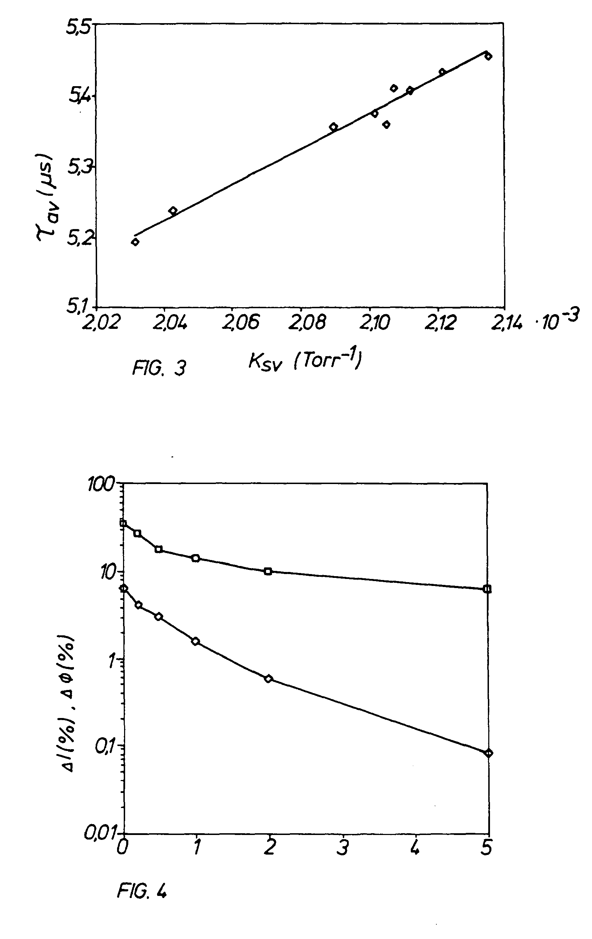

Ebenso kann man eine Reduktion der Stern-Volmer-Konstante parallel zur Reduktion der Abklingzeit nachweisen (Fig. 3). Sauerstoff begünstigt die Photodegeneration stark, jedoch ist möglicherweise auch ein thermischer Einfluß (in Abwesenheit von Sauerstoff) vorhanden. Zugabe von DABCO verringert in erster Linie durch physikalisches Löschen von Singulett-Sauerstoff den Effekt des Photobleichens wesentlich (siehe auch Tabelle). Die Tabelle enthält auch noch Meßdaten, die unter Verwendung anderer Additive gewonnen wurden. Der Bleicheffekt wird als relative

Signalabnahme (Intensitätsabnahme $\Delta I_{16}$, Änderung der Phasenverschiebung $\Delta\Phi_{16}$) nach 16stündiger Beleuchtung unter reinem Sauerstoff und sonstigen oben genannten Bedingungen quantifiziert.

Die Wirkung von Additiven, wie DABCO, ist abhängig von deren Konzentration in der sensitiven Schicht. Fig. 4 zeigt die Konzentrationsabhängigkeit (Abszisse: Gew.-% DABCO) der Stabilisierung.

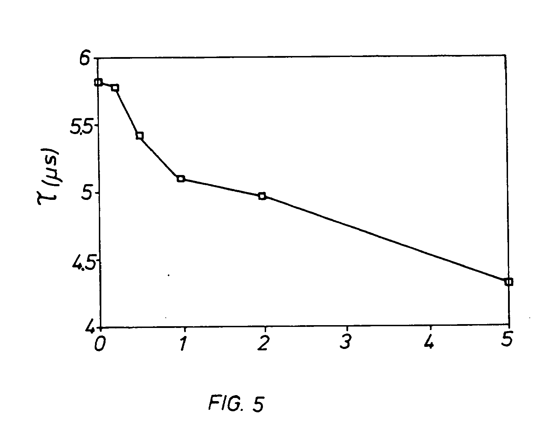

Viele der möglichen Additive, auch DABCO, zeigen als Nebeneffekt auch eine Beeinflussung der photophysikalischen Eigenschaften des Indikators in der sensitiven Schicht. Fig. 5 zeigt die Reduktion der Abklingzeit mit zunehmender Konzentration an DABCO (Abszisse: Gew.-% DABCO): Dieser Effekt ist jedoch in diesem Fall, gemessen am Effekt der Stabilisierung, nicht sehr groß und stellt weder die Wirksamkeit des Additivs gegen Photozersetzung noch die Empfindlichkeit des Sensors in Frage.

Ähnlich gute Ergebnisse konnten erzielt werden, wenn anstelle des im Beispiel erwähnten Sensors folgende Sensoren verwendet wurden: Tris(1,10-phenanthrolin)-ruthenium(II)/PVC/DABCO; Tris(4,7-diphenyl-1,10-phenanthrolin)-ruthenium(II)/weichgemachtes PVC/DABCO; Tris(1,10-phenanthrolin)-ruthenium(II)/Kieselgel in Silikon/DABCO; Tris(2,2'-bipyridyl)-ruthenium(II)/Kieselgel in Silikon/DABCO; Tris(4,7-diphenyl-1,10-phenanthrolin)-ruthenium(II)/Polystyrol/Chimassorb 944; Tris(4,7-diphenyl-1,10-phenanthrolin)-ruthenium(II)/Polystyrol/DABCO+Chimassorb 944; Tris(4,7-diphenyl-1,10-phenanthrolin)-ruthenium(II)/Polystyrol/Tinuvin 770; Tris(4,7-diphenyl-1,10-phenanthrolin)-ruthenium(II)/Poly-(4-(N,N-dimethylamino)-styrol); Tris(4,7-diphenyl-1,10-phenanthrolin)-ruthenium(II)/Poly-(4-(N'N-dimethylamino)-styrol)-co-Polystyrol (97%); Platin(II)-octaethylporphyrin/PolystyroUDABCO; Platin(II)-octaethylporphyrin-keton/PolystyroUDABCO; Platin(II)-octaethylporphyrin-keton/PVC/Nichelat.

Tabelle

Relative Intensitätsänderung und relative Phasenverschiebungsänderung der Lumineszenz von Tris(4,7-diphenyl-1,10-phenanthrolin)rutheniumperchlorat in Polystrol nach 16-stündiger Beleuchtung mit blauem Licht (470 nm) der Stärke 20 mW/cm$^2$. Sensortemperatur T=37°C; Bleichen unter Sauerstoff; Messung unter Stickstoff. Unbehandelter Sensor vs. Varianten unter Zugabe stabilisierender Additive.

| Additiv | $\Delta I_{16}$ | $\Delta\Phi_{16}$ |
|---|---|---|
|  | % | % |
| - | 35 | 6.6 |
| 1 % DABCO | 14 | 1.6 |
| 1 % Chimassorb 944 | 18 | 3.5 |
| 1 % DABCO + 1 % Chimassorb 944 | 10 | 1.2 |
| 1 % Tinuvin 770 | 19 | 4.2 |

**Patentansprüche**

1.  Optischer Sensor mit einer Matrix, die einen Lumineszenzindikator aufweist, dessen Lumineszenz mit Sauerstoff gequencht werden kann,
    **dadurch gekennzeichnet,**
    **daß** der Sensor zur Stabilisierung des Lumineszenzindikators und der Matrix mindestens ein Mittel aufweist, welches Singulett-Sauerstoff deaktivieren kann, wobei das Mittel an die Matrix oder den Lumineszenzindikator gebunden ist.

2.  Optischer Sensor nach Anspruch 1, **dadurch gekennzeichnet, daß** das Mittel zum Deaktivieren von Singulett-Sauerstoff mindestens eine Aminogruppe, vorzugsweise eine tertiäre Aminogruppe, aufweist.

3.  Optischer Sensor nach Anspruch 1, **dadurch gekennzeichnet, daß** das Mittel zum Deaktivieren von Singulett-Sauerstoff ein "hindered amine light stabilizer" (HALS) ist.

4.  Optischer Sensor nach Anspruch 1, **dadurch gekennzeichnet, daß** das Mittel zum Deaktivieren von Singulett-Sauerstoff ein Übergangsmetallkomplex ist.

5.  Optischer Sensor nach Anspruch 4, **dadurch gekennzeichnet, daß** der Übergangsmetallkomplex ein Komplex aus einem Dialkyldithiocarbamat, Dialkyldithiophosphat oder einer Schiff' schen Base und einem Übergangsmetallion ist.

6. Optischer Sensor nach Anspruch 5, **dadurch gekennzeichnet, daß** das Übergangsmetallion Ni(II), Co(II), Zn(II) oder Fe(III) ist.

7. Optischer Sensor nach Anspruch 1, **dadurch gekennzeichnet, daß** das Mittel zum Deaktivieren von Singulett-Sauerstoff ein Karotenoid ist.

8. Optischer Sensor nach einem der Ansprüche 1 bis 3, **dadurch gekennzeichnet, daß** das Mittel über eine Gruppe $-(CH_2)_n-$, worin n eine ganze Zahl von 3 bis 20 ist, an den Lumineszenzindikator gebunden ist.

9. Optischer Sensor nach einem der Ansprüche 1 bis 8, **dadurch gekennzeichnet, daß** die Matrix ein Polymer ist.

10. Optischer Sensor nach Anspruch 9, **dadurch gekennzeichnet, daß** das Polymer Polystyrol, Polyvinylchlorid, weichgemachtes Polyvinylchlorid, Polymethylmethacrylat, weichgemachtes Polymethylmethacrylat, ein Polymethylmethacrylat/Cellulose-acetyl-butyral-Gemisch, ein Kieselgel, ein Sol-Gel, ein Hydrogel, ein Silikon, Poly-$\alpha$-methylstyrol, ein Polysulfon, Ethylcellulose, Cellulosetriacetat, Polytetrafluorethylen, ein Polyester, Polybutadien, Polystyrol-co-butadien, Polyurethan, Polyvinylbutyral, Polyethylacrylat oder Poly-2-hydroxyethylmethacrylat ist.

11. Optischer Sensor nach Anspruch 9, **dadurch gekennzeichnet, daß** das Polymer aus Monomeren hergestellt ist, die zumindest teilweise eine Aminogruppe, vorzugsweise eine tertiäre Aminogruppe, tragen.

12. Optischer Sensor nach einem der Ansprüche 1 bis 11, **dadurch gekennzeichnet, daß** der Lumineszenzindikator ein Tris-Chelat-Komplex von Ruthenium(II), Osmium(II), Rhodium(III) oder Iridium(III), ein Metallporphyrin oder ein Metall-porphyrin-keton von Platin oder Palladium, ein Lanthanid-Komplex von Terbium, oder ein polycyclischer aromatischer Kohlenwasserstoff ist.

13. Optische Sensorkonfiguration mit einem optischen Sensor, einer Lichtquelle zur Erzeugung von Licht zur Anregung des Lumineszentindikators und einer Meßeinrichtung zur Messung mindestens einer optischen Eigenschaft des Lumineszenzindikators,
**dadurch gekennzeichnet,**
**daß** ein optischer Sensor gemäß einem der Ansprüche 1 bis 12 vorgesehen ist.

14. Methode zur Bestimmung eines Analyten in einer gasförmigen oder flüssigen Probe mittels eines optischen Sensors, der mit der Probe direkt oder indirekt in Kontakt gebracht wird,
**dadurch gekennzeichnet,**
**daß** ein Sensor gemäß einem der Ansprüche 1 bis 12 eingesetzt wird.

## Claims

1. An optical sensor with a matrix comprising a luminescence indicator the luminescence of which can be quenched by oxygen,
**characterized in that**
the sensor comprises at least one agent capable of deactivating singlet oxygen for stabilizing the luminescence indicator and the matrix, wherein the agent is bound to the matrix or the luminescence indicator.

2. An optical sensor according to claim 1, **characterized in that** the agent for deactivating singlet oxygen comprises at least one amino group, preferably a tertiary amino group.

3. An optical sensor according to claim 1, **characterized in that** the agent for deactivating singlet oxygen is a hindered amine light stabilizer (HALS).

4. An optical sensor according to claim 1, **characterized in that** the agent for deactivating singlet oxygen is a transition metal complex.

5. An optical sensor according to claim 4, **characterized in that** the transition metal complex is a complex of a dialkyldithio carbamate, dialkyldithio phosphate or a Schiff's base and a transition metal ion.

**6.** An optical sensor according to claim 5, **characterized in that** the transition metal ion is Ni(II), Co(II), Zn(II) or Fe(III).

**7.** An optical sensor according to claim 1, **characterized in that** the agent for deactivating singlet oxygen is a carotenoid.

**8.** An optical sensor according to any of claims 1 to 3, **characterized in that** the agent is bound to the luminescence indicator via a group $-(CH_2)_n-$, wherein n is an integer from 3 to 20.

**9.** An optical sensor according to any of claims 1 to 8, **characterized in that** the matrix is a polymer.

**10.** An optical sensor according to claim 9, **characterized in that** the polymer is polystyrene, polyvinyl chloride, plasticized polyvinyl chloride, polymethyl methacrylate, plasticized polymethyl methacrylate, a polymethyl methacrylate/cellulose-acetyl-butyral mixture, a silica gel, a sol gel, a hydrogel, a silicone, poly-$\alpha$-methylstyrene, a polysulfone, ethyl cellulose, cellulose triacetate, polytetrafluoroethylene, a polyester, polybutadiene, polystyrene-co-butadiene, polyurethane, polyvinyl butyral, polyethyl acrylate or poly-2-hydroxyethyl methacrylate.

**11.** An optical sensor according to claim 9, **characterized in that** the polymer is produced from monomers which carry, at least partially, an amino group, preferably a tertiary amino group.

**12.** An optical sensor according to any of claims 1 to 11, **characterized in that** the luminescence indicator is a trischelate complex of ruthenium(II), osmium(II), rhodium(III) or iridium(III), a metalloporphyrin or a metalloporphyrin ketone of platinum or palladium, a lanthanide complex of terbium or a polycyclic aromatic hydrocarbon.

**13.** An optical sensor configuration comprising an optical sensor, a light source for generating light for exciting the luminescence indicator and a measuring means for measuring at least one optical property of the luminescence indicator,
**characterized in that**
an optical sensor according to any of claims 1 to 12 is provided.

**14.** A method of determining an analyte in a gaseous or liquid sample by means of an optical sensor which is contacted with the sample either directly or indirectly,
**characterized in that**
a sensor according to any of claims 1 to 12 is used.

**Revendications**

**1.** Capteur optique avec une matrice, qui comprend un indicateur à luminescence dont la luminescence peut être atténuée avec de l'oxygène, **caractérisé en ce que** le capteur comprend au moins un moyen permettant de stabiliser l'indicateur à luminescence et la matrice, qui peut désactiver l'oxygène singulet, où ce moyen est lié à la matrice ou à l'indicateur à luminescence.

**2.** Capteur optique selon la revendication 1, **caractérisé en ce que** le moyen de désactivation de l'oxygène singulet comprend au moins un groupe amino, de préférence un groupe amino tertiaire.

**3.** Capteur optique selon la revendication 1, **caractérisé en ce que** le moyen de désactivation de l'oxygène singulet est un « hindered amine light stabiliser »(HALS).

**4.** Capteur optique selon la revendication 1, **caractérisé en ce que** le moyen de désactivation de l'oxygène singulet est un complexe métallique de transition.

**5.** Capteur optique selon la revendication 4, **caractérisé en ce que** le complexe métallique de transition est un complexe constitué de dialkyldithiocarbamate, de dialkyldithiophosphate, ou d'une base de Schiff et d'un ion métallique de transition.

**6.** Capteur optique selon la revendication 5, **caractérisé en ce que** l'ion métallique de transition est le Ni(II), le Co(II), le Zn(II) ou le Fe(III).

**7.** Capteur optique selon la revendication 1, **caractérisé en ce que** le moyen de désactivation de l'oxygène singulet est un caroténoïde.

8. Capteur optique selon l'une des revendications 1 à 3, **caractérisé en ce que** le moyen est lié à l'indicateur à luminescence par l'intermédiaire d'un groupe -(CH$_2$)$_n$-, où n est un nombre entier de 3 à 20.

9. Capteur optique selon l'une des revendications 1 à 8, **caractérisé en ce que** la matrice est un polymère.

10. Capteur optique selon la revendication 9, **caractérisé en ce que** le polymère est du polystyrol, du polychlorure de vinyle, du polychlorure de vinyle assoupli, du polyméthacrylate, du polyméthacrylate assoupli, un mélange polyméthacrylate/butyral d'acétylcellulose, du gel de silice, un gel de sol, un hydrogel, un silicone, du poly-α-méthylstyrol, un polysulfone, de l'éthylcellulose, du triacétate de cellulose, du polytétrafluoréthylène, un polyester, du polybutadiène, du polystryrol-co-butadiène, du polyuréthane, du polybutyral de vinyle, du polyéthylacrylate ou du poly-2-hydroxyéthylméthacrylate.

11. Capteur optique selon la revendication 9, **caractérisé en ce que** le polymère est constitué de monomères qui comprennent au moins partiellement un groupe amino, de préférence un groupe amino tertiaire.

12. Capteur optique selon l'une des revendications 1 à 11, **caractérisé en ce que** l'indicateur à luminescence est un complexe tris-chélate de ruthénium(II), d'osmium(II), de rhodium(III) ou d'iridium(III), une porphyrine métallique ou un métal-porphyrine-cétone de platine ou de palladium, un complexe lanthanide de Terbium ou un hydrocarbure polycyclique aromatique.

13. Conception de capteur optique avec un capteur optique, une source de lumière pour la production d'une lumière d'excitation de l'indicateur à luminescence et un dispositif de mesure permettant de mesurer au moins une propriété optique de l'indicateur à luminescence, **caractérisé en ce que** le capteur optique est conçu selon l'une des revendications 1 à 12.

14. Procédé de détermination d'un analyte dans un échantillon gazeux ou liquide à l'aide d'un capteur optique pouvant être mis en contact directement ou indirectement avec l'échantillon, **caractérisé en ce qu'**un capteur selon l'une des revendications 1 à 12 est utilisé.

FIG. 1

FIG. 2

FIG. 3

FIG. 4

FIG. 5